# EUROPÄISCHE PATENTSCHRIFT

(11) **EP 3 289 943 B1**
(45) Veröffentlichungstag und Bekanntmachung des Hinweises auf die Patenterteilung: **29.05.2019**
(21) Anmeldenummer: 17186281.6
(22) Anmeldetag: 15.08.2017
(51) Int. Cl.: A47J 43/07

(54) **KÜCHENGERÄT, INSBESONDERE STANDMIXER, MIT LÜFTUNGSGERÄUSCHMINIMIERUNG**
KITCHEN APPLIANCE, IN PARTICULAR STAND MIXER, WITH VENTILATION NOISE MINIMISATION
MATÉRIEL DE CUISINE, EN PARTICULIER BLENDER, DOTÉ DU DISPOSITIF DE MINIMISATION DE BRUIT D'ÉVACUATION D'AIR

(30) Priorität: 31.08.2016 DE 102016216410
(43) Veröffentlichungstag der Anmeldung: 07.03.2018
(73) Patentinhaber: BSH Hausgeräte GmbH, 81739 München (DE)
(72) Erfinder: Stergar, David, 3342 Gornji, Grad (SI); Koren, Peter, 3331 Nazarje (SI); Jegrisnik, Uros, 3313 Polzela (SI)

(56) Entgegenhaltungen:
- CN-U- 204 192 430
- US-A- 3 901 484
- US-A1- 2006 007 778
- US-A1- 2016 113 445
- US-B1- 6 499 873

## Beschreibung

### Hintergrund der Erfindung

Die vorliegende Erfindung betrifft Küchengerät, insbesondere Standmixer oder Blender mit einem elektrischen Antriebsmotor und einer Luftaustrittsfläche für die Elektromotorabluft.

### Stand der Technik

Ein Standmixer oder einfach Mixer oder Blender sind elektrisch betriebene Küchengeräte zur Mischung flüssiger bzw. halbfester Zutaten oder zum Pürieren von Speisen. Im Gegensatz zu für vergleichbare Zwecke eingesetzten Pürierstäben handelt es sich um Standgeräte. Der amerikanische Begriff ist Blender.

Ein Standmixer besteht üblicherweise aus zwei Hauptteilen. Der Hauptkörper enthält einen meist für mehrere Betriebsgeschwindigkeiten schaltbaren bzw. steuerbaren Elektromotor. Darauf sitzt ein abgeschlossener Behälter aus Edelstahl, Glas oder transparentem Kunststoff. Am Grund des Behälters befindet sich ein je nach Bauart zu Reinigungszwecken eventuell herausnehmbarer Messerstern, der mittels Kupplung durch den Elektromotor in schnelle Rotation versetzt wird, solcherart die Zutaten zerkleinernd und mischend, emulgierend oder suspendierend.

Diese Geräte werden meist mit hohen Rotationsgeschwindigkeiten betrieben, welches zu Überhitzungen und/oder mechanischen Instabilitäten führen kann.

Zum Abführen der Hitze weisen die Standmixer Lüfter und/oder Lüftungsräder welche die erhitzte Luft aus dem Inneren des Gehäuses nach außen ausblasen. Durch die Luftströmung entstehen jedoch Luftzirkulationsgeräusche, die ein Benutzer als störend empfinden kann.

Einen möglichen Aufbau eines Gehäuseabschnittes für einen Standmixer ist beispielsweise in der US 6 499 873 B1 offenbart.

### Der Erfindung zugrundeliegende Aufgabe

Es ist daher Aufgabe der vorliegenden Erfindung ein Küchengerät bereitzustellen, welches einen geräuscharmen Betrieb bereitstellt.

### Erfindungsgemäße Lösung

Die Lösung der gestellten Aufgabe gelingt durch ein Küchengerät gemäß der Merkmalskombination des Anspruchs 1. Vorteilhafte Aus- und Weiterbildungen, welche einzeln oder in Kombination miteinander eingesetzt werden können, sind Gegenstand der abhängigen Ansprüche.

Es wird ein elektromotorisches Küchengerät, insbesondere Standmixer oder Blender bereitgestellt. Das Küchengerät umfasst einen Lüfter, der im Betrieb des Elektromotors entwickelte Hitze durch eine Luftaustrittsfläche eines Gehäuseabschnitts des Küchengeräts abführt. Die Luftaustrittsfläche weist eine Flächenkrümmung auf. Durch die erfindungsgemäße Flächenkrümmung kann eine effektive Geräuschminimierung der austretenden Luft aus dem Inneren des Küchengerätegehäuses bereitgestellt werden. Die Krümmung der Luftaustrittsfläche zusammen mit den Lüftungsöffnungen bewirkt eine Schallwellenüberlappung, welches die Geräuschminimierung zur Folge hat.

Die Flächenkrümmung gemäß der vorliegenden Erfindung ist zum Inneren des Küchengerätegehäuses gerichtet, um einen möglichst kompakten Gehäuseaufbau zu ermöglichen.

Erfindungsgemäß ist die Flächenkrümmung der Luftaustrittsfläche durch eine Wölbung des Gehäuseabschnitts ausgebildet bzw. gebildet. Folglich kann ein kompakter Aufbau bei einer gleichzeitigen Schallwellenüberlappung bereitgestellt werden.

Gemäß der Erfindung ist um die Wölbung des Gehäuseabschnitts eine Mulde ausgebildet. Diese Mulde erhöht die effektive Luftaustrittsfläche und bietet gleichzeitig Platz für die Implementierung geeigneter Luftaustrittsöffnungen.

Die Luftaustrittsfläche weist konzentrisch angeordnete Lüftungsschlitze auf. Es hat sich herausgestellt, dass dieser Aufbau der Lüftungsöffnungen eine effektive Geräuschminimierung bereitstellt.

Es ist bevorzugt, dass die Wölbung rotationssymmetrisch um den Mittelpunkt der konzentrischen Lüftungsschlitze ausgebildet ist. Folglich kann ein kostengünstiges Herstellverfahren verwendet werden, da Spritzgusswerkzeuge einfach aufgebaut sein können.

Durch den erfindungsgemäßen Aufbau der gekrümmten Luftaustrittsfläche kann eine strömungstechnische vorteilhafte Luftverteilung der Abluft erreicht werden, welches zu einer weitgehend verminderten Geräuschbildung während des Betriebes des Küchengeräts führt.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 zeigt eine perspektivische Ansicht eines Gehäuseabschnitts des Küchengeräts gemäß der vorliegenden Erfindung; und
Fig. 2 eine Seitenansicht des Gehäuseabschnitts aus Fig. 1.

### Ausführliche Beschreibung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

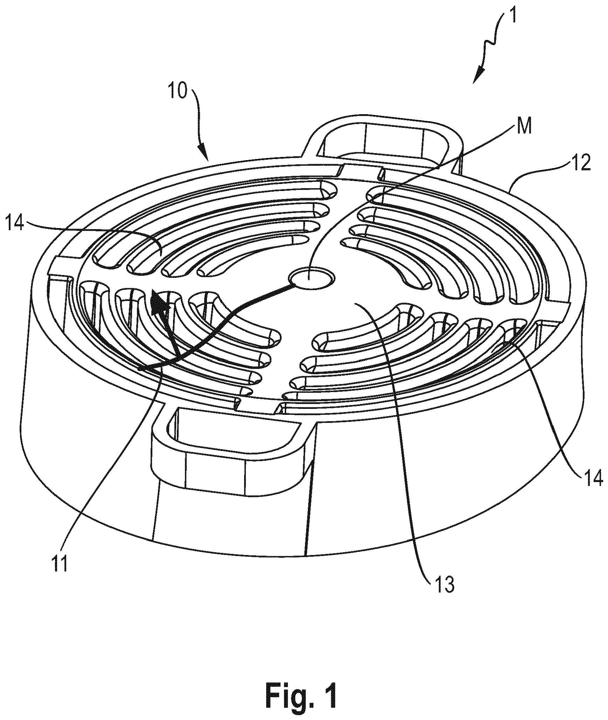

Fig. 1 zeigt den unteren Gehäuseabschnitt eines Küchengeräts, insbesondere Standmixer oder Blender. Der Gehäuseabschnitt 12 ist im unteren Bereich des Hauptkörpers des Blenders 1 ausgebildet. Im inneren des Gehäuses oberhalb des Gehäuseabschnitts 12 ist ein Elektromotor zum Antreiben des Küchengeräts angeordnet. Zum Kühlen des Motors ist ein Lüfter 17 oder ein Lüfterrad vorgesehen, der die Wärme vom Motor abführen kann.

Der Lüfter 17 kann als Modul oder auch als Lüfterrad ausgebildet sein, welches direkt von der Achse des Elektromotors des Küchengeräts angetrieben werden kann.

Gemäß diese Ausführungsbeispiels weist der Gehäuseabschnitt 12 eine Luftaustrittsfläche 10 durch welche die Abluft des Lüfters 17 abgeleitet wird. Diese Fläche 10 weist eine Flächenkrümmung 11 auf, die schematisch anhand eines Flächenvektors in der Fig. 1 dargestellt ist. Durch die Krümmung 11 gemäß dieser Ausführungsform entsteht eine Wölbung 13, die rotationssymmetrisch ausgebildet ist. Die Wölbung 13 kann integral mit dem Gehäuseabschnitt 12 ausgebildet sein, wobei auch ein modularer Aufbau vorstellbar ist.

Die Luftaustrittsfläche 10 gemäß diesem Ausführungsbeispiel umfasst eine Vielzahl von konzentrisch ausgebildeten Lüftungsschlitzen (14), die einen gemeinsamen Kreismittelpunkt M aufweisen. Die Wölbung 13 ist rotationssymmetrisch um den gemeinsamen Kreismittelpunkt M der Lüftungsschlitze 14 ausgebildet.

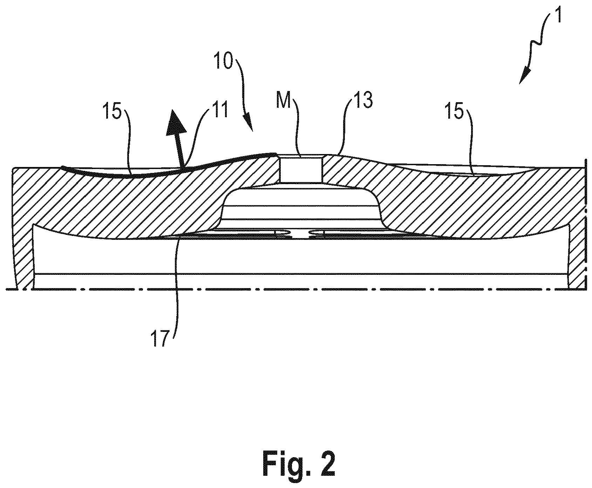

Fig. 2 zeigt eine Schnittdarstellung des Gehäuseteils aus Fig. 1. Durch die gekrümmte Luftaustrittsfläche 11 kann die Luft aus dem Inneren des Gehäuses mit verminderter Geräuschentwicklung ausströmen. Um die Wölbung 12 ist eine Mulde 15 bzw. ein Muldenbereich gebildet, welcher zusammen mit den Lüftungsschlitzen 14 eine Geräuschminimierung bei der ausströmenden Luft bewirken.

Durch den erfindungsgemäßen Aufbau der gekrümmten Luftaustrittsfläche kann eine strömungstechnische vorteilhafte Luftverteilung der Abluft erreicht werden, welches zu einer weitgehend verminderten Geräuschbildung während des Betriebes des Küchengeräts führt.

## Patentansprüche

1. Elektromotorisches Küchengerät (1) mit einem Lüfter (17), der im Betrieb des Elektromotors entwickelte Hitze durch eine Luftaustrittsfläche (10) eines Gehäuseabschnitts (12) des Küchengeräts (1) abführt, wobei die Luftaustrittsfläche (10) eine Flächenkrümmung (11) aufweist, **dadurch gekennzeichnet, dass** die Flächenkrümmung (11) der Luftaustrittsfläche (10) durch eine Wölbung (13) des Gehäuseabschnitts (12) gebildet ist und wobei um die Wölbung (13) des Gehäuseabschnitts (12) eine Mulde (15) ausgebildet ist.

2. Elektromotorisches Küchengerät (1) nach Patentanspruch 1, **dadurch gekennzeichnet, dass** die Luftaustrittsfläche (10) konzentrisch angeordnete Lüftungsschlitze (14) aufweist.

3. Elektromotorisches Küchengerät (1) nach Patentanspruch 2, **dadurch gekennzeichnet, dass** die die Wölbung (12) rotationssymmetrisch um den Mittelpunkt (M) der konzentrischen Lüftungsschlitze (14) ausgebildet ist.

## Claims

1. Electromotive kitchen appliance (1) with a fan (17) which dissipates heat generated during operation of the electric motor through an air outlet area (10) of a housing section (12) of the kitchen appliance (1), wherein the air outlet area (10) has a surface curvature (11), **characterised in that** the surface curvature (11) of the air outlet area (10) is formed by a bulging (13) of the housing section (12) and wherein a depression (15) is embodied around the bulging (13) of the housing section (12).

2. Electromotive kitchen appliance (1) according to claim 1, **characterised in that** the air outlet area (10) has concentrically arranged ventilation slots (14).

3. Electromotive kitchen appliance (1) according to claim 2, **characterised in that** the bulging (12) is embodied with rotational symmetry around the centre point (M) of the concentric ventilation slots (14).

## Revendications

1. Appareil de cuisine à moteur électrique (1) avec un ventilateur (17) qui évacue la chaleur produite durant le fonctionnement du moteur électrique à travers une surface de sortie d'air (10) d'une section de carcasse (12) de l'appareil de cuisine (1), dans lequel la surface de sortie d'air (10) présente une courbure de surface (11), **caractérisé en ce que** la courbure de surface (11) de la surface de sortie d'air (10) est constituée par une convexité (13) de la section de carcasse (12) et dans lequel un creux (15) est constitué autour de la convexité (13) de la section de carcasse (12).

2. Appareil de cuisine à moteur électrique (1) selon la revendication 1, **caractérisé en ce que** la surface de sortie d'air (10) présente des fentes d'aération (14) disposées de façon concentrique.

3. Appareil de cuisine à moteur électrique (1) selon la revendication 2, **caractérisé en ce que** la convexité (12) est constituée en symétrie de rotation autour du point central (M) des fentes d'aération concentriques (14).
